# EUROPÄISCHE PATENTSCHRIFT

(11) **EP 0 915 577 B1**
(45) Veröffentlichungstag und Bekanntmachung des Hinweises auf die Patenterteilung: **15.09.2004**
(21) Anmeldenummer: 98120494.4
(22) Anmeldetag: 29.10.1998
(51) Int. Cl.: H04B 7/185, H04B 7/005

(54) **System zur Benutzung von Mobiltelefonen in einem Verkehrsflugzeug**
System for the use of mobile phones in a passenger aircraft
Système pour l'utilisation de terminaux mobiles dans un avion de ligne

(30) Priorität: 05.11.1997 DE 19748899
(43) Veröffentlichungstag der Anmeldung: 12.05.1999
(73) Patentinhaber: Rohde & Schwarz GmbH & Co. KG, 81671 München (DE)
(72) Erfinder: Bongart, Winfried, 82054 Sauerlach (DE)
(74) Vertreter: Graf, Walter, Dipl.-Ing.

(56) Entgegenhaltungen:
- EP-A- 0 565 507
- WO-A-94/28684
- WO-A-96/02094
- US-A- 5 543 779
- CHAPMAN R H: "MOBILE POWER CONTROL BY THE BASE STATION" MOTOROLA TECHNICAL DEVELOPMENTS,US,MOTOROLA INC. SCHAUMBURG, ILLINOIS, Bd. 8, Nr. 1, Seite 18-20 XP000004074

## Beschreibung

Die Erfindung geht aus von einem System laut Oberbegriff des Hauptanspruches.

Die Benutzung von Mobiltelefonen (in Deutschland im allgemeinen Sprachgebrauch "Handies" genannt) ist an Bord von Verkehrsflugzeugen weltweit verboten. Erfahrungen der letzten Jahre mit kritischen Situationen und Beinahe-Abstürzen von Verkehrsflugzeugen haben gezeigt, daß Mobiltelefone wegen des benutzten Frequenzbereiches, der Modulationsart, vor allem aber wegen der relativ hohen Sendeleistung der Geräte von bis zu 2 Watt die Elektronik des Flugzeuges empfindlich stören können.

Auf der anderen Seite wird aus Sicht des Mobilfunkteilnehmers das Verbot der Benutzung seines Mobiltelefones im Flugzeug als erhebliche Einschränkung empfunden. In fast allen Bereichen des öffentlichen und privaten Lebens darf das Mobiltelefon heute uneingeschränkt benutzt werden, so z.B. zu Hause, auf der Straße, im Zug, im Bus, im Auto, im Flughafengebäude etc. Das Flugzeug ist eines der letzten Verbotsbereiche, in dem die Benutzung der Mobiltelefone dringend gewünscht wird, sofern sich dafür eine technische Möglichkeit bietet.

Digitale Mobiltelefone nach dem GSM Standard (GSM: Global System for mobile Communication), die heute den überwältigenden Anteil am Mobilfunkmarkt darstellen, benutzen den im GSM Standard festgelegten Modus. Dabei gibt die jeweilige Basisstation, mit der die Mobiltelefone über Funk in Verbindung stehen, jedem einzelnen Mobilgerät die Sendeleistung vor, mit der es senden darf, um am Empfangsort der Basisstation eine einheitliche Empfangsfeldstärke aller Teilnehmer - unabhängig von ihrer Entfernung von der Basisstation - zu gewährleisten. Die im GSM-Standard festgelegte minimale Sendeleistung der Mobilgeräte beträgt für Phase 1 13dBm entsprechend etwa 20mW und für Phase 2 5dBm entsprechend etwa 3mW.

Digitale Mobilfunksysteme nach dem GSM-Standard für den Telefonverkehr zwischen Flugzeug und Erde sind bereits Stand der Technik, wie der Offenlegungsschrift WO 96 02094 A zu entnehmen ist. Hierbei wird eine Kommunikationsverbindung zwischen einer bordseitigen Basisstation über eine Funkübertragungsstrecke zur nächst gelegenen Basisstation auf der Erde realisiert. Die bordseitige Basisstation empfängt den Anruf vom Boden über eine an der Außenseite des Flugzeuges angebrachte Antenne und sendet ihn an das bordseitige Mobiltelefon. Die terrestrische Basisstation erhält analog den Telefonanruf vom Flugzeug über eine Antenne und leitet ihn in das öffentliche Telefonnetz zum gewünschten Netzteilnehmer weiter. Neben den Kommunikationsdaten werden zwischen der bordseitigen und der terrestrischen Basisstation zusätzliche Daten zur Ortung des Flugzeuges sowie zur Kommunikationsweiterschaltung an die nächste terrestrische Zellen-Basisstation beim Eindingen des Flugzeuges in einen anderen Zellenbereich ausgetauscht.

Es ist daher Aufgabe der Erfindung, ein System aufzuzeigen, das unter voller Einhaltung der Verträglichkeitsforderungen von Verkehrsflugzeugen offiziell die Benutzung von Mobiltelefonen in Verkehrsflugzeugen erlaubt.

Diese Aufgabe wird ausgehend von einem System 1t. Oberbegriff des Hauptanspuches durch dessen kennzeichnende Merkmale gelöst. Vorteilhafte Weiterbildungen ergeben sich aus den Unteransprüchen.

Gemäß der Erfindung werden durch die bordseitige Basisstation während des Fluges im Flugzeug gegebenenfalls aktivierte Mobiltelefone sofort auf ihre minimale Leistung zurückgeregelt und können damit die Sicherheit des Flugzeuges nicht mehr beeinträchtigen. Diese Sicherheit kann noch dadurch erhöht werden, daß oberhalb der Deckenverkleidung der Flugzeugkabine ein Antennensystem angebracht wird, das diese bordseitige Basisstation mit allen Sitzplätzen verbindet, so daß der Luftweg zwischen einem aktivierten Handy von jedem Sitzplatz aus zur Basisstation nur jeweils einige Meter beträgt und die Basisstation somit mit Sicherheit auf kürzeste Entfernung erkennt und auf minimale Leistung zurückregelt. Damit ist ein kontrollierter Betrieb von Mobiltelefonen an Bord eines Verkehrsflugzeuges jeweils im Minimal-Leistungsbereich gewährleistet. Das erfindungsgemäße System kann bei allen Mobilfunknetzen angeordnet werden, die eine Leistungsregelung der Handies durch die Basisstationen vorsehen.

Aus Sicherheitsgründen kann es gemäß einer Weiterbildung der Erfindung noch von Vorteil sein, an Bord des Flugzeuges eine zusätzliche Frequenzband-Überwachungseinrichtung vorzusehen, die vorzugsweise wiederum über ein verteiltes Antennensystem mit den einzelnen Sitzplätzen direkt verbunden ist und mit welcher sofort erkannt wird, wenn von einem beschädigten oder nicht ordnungsgemäß arbeitenden Mobiltelefon eine vorbestimmte Sendeleistung überschritten wird.

Die Erfindung wird im Folgenden anhand einer schematischen Zeichnung an einem Ausführungsbeispiel näher erläutert.

Gemäß der Erfindung ist in einem Verkehrsflugzeug 1 jeweils eine Basisstation 2 für die am häufigsten verwendeten Mobilfunknetze oder eine entsprechende Multifunktions-Basisstation, die alle nach dem GSM-Standard arbeitenden Mobilfunknetze umfaßt, vorgesehen, deren Eingang mit einem in der Kabine verteilten Antennensystem 3 verbunden ist. Diese Basisstation 2 ist ferner über eine nachfolgend näher erklärte Funkübertragungsstrecke 4, 7 oder 8 mit dem zugehörigen bodenseitigen Mobilfunknetz 5 verbunden. Wenn ein Passagier auf irgendeinem der Sitzplätze sein Mobiltelefon 6 aktiviert, so wird dieser Ruf durch die diesem Sitz am nächsten benachbarte Antenne des Antennensystems 3 empfangen und der Basisstation 2 zugeleitet, die wegen der großen Nähe des Mobiltelefons 6 zur Antenne 3 das aktivierte Mobiltelefon sofort auf kleinste Sendeleistung zurückregelt. Anschließend kann dann der Benutzer des Mobiltelefons in üblicher Weise über die Basisstation einen Ruf in seinem Mobilfunknetz ausführen bzw. über die Zentrale seines Netzes mit einem damit verbundenen weltweiten öffentlichen Fernsprechnetz verbunden werden.

Die bordseitige Basisstation kann beispielsweise über die nachfolgenden bekannten für Flugzeuge entwickelte Übertragungssysteme mit einer Bodenstation des Mobilfunknetzes bzw. eines weltweiten öffentlichen Fernsprech- und Kommunikationsnetzes verbunden sein:

### Satellitensystem SATCOM Aero H

Für die Belange der Passagierkommunikation in Langstreckenflugzeugen entwickeltes und heute serienreifes Satellitensystem 4, das die Satelliten der INMARSAT Organisation (International Maritime Satellite Organisation) nutzt.
Das System wird heute auf vielen Langstreckenflugzeugen zahlreicher Fluggesellschaften betrieben.

### Terrestrial Flight Telecommunication System (TFTS)

Für die Belange der Passagierkommunikation in Kurz- und Mittelstreckenflugzeugen entwickeltes und heute serienreifes System 7 zur Direktverbindung zwischen Flugzeug und Bodenstation.
Der Betrieb von TFTS setzt eine flächendeckende Infrastruktur am Boden voraus. Eine lückenlose Abdeckung ist heute in Mittel- und Nordeuropa gewährleistet.

### IRIDIUM

In der Testphase befindliches, weltumspannendes Satellitensystem 8 mit 66 in erdnahen Bahnen kreisenden Satelliten (LEO: Low Earth Orbit Satellites), bei dem erdgebundene Teilnehmer Direktkontakt mit einem Satelliten aufnehmen und weltweite Kommunikation betreiben können.
Eine Flugzeug-Bordstation ist im IRIDIUM System vorgesehen und soll Ende 1999 verfügbar sein.

Um die Sicherheit des Systems noch zu erhöhen und insbesondere auch Fälle von beschädigten oder vorsätzlich abgeänderten Mobiltelefonen oder von aus anderen Gründen nicht GSM-Standard konformen Geräten abzudecken, ist es von Vorteil, eine zusätzliche elektronische Frequenzband-Überwachungseinrichtung 9 vorzusehen, wie sie inzwischen als PED-Scanner (Portable Electronic Devices = von Passagieren mit an Bord eines Verkehrsflugzeuges gebrachte elektronische Geräte) bekannt sind. Damit kann breitbandig oder in definierten Teil-Frequenzbändern die Abstrahlung von durch Passagiere mit an Bord eines Verkehrsflugzeuges gebrachten und betriebenen Mobiltelefonen und auch anderen elektronischen Geräten, wie tragbare Computer, CD-Player, Walkman, Videokameras u.dgl. festgestellt werden. Wird eine vorher festgelegte Grenzfeldstärke überschritten, so wird dies über den PED-Scanner der Kabinenbesatzung bzw. dem Cockpit sofort mitgeteilt. Je nach Ausstattung der Frequenzband-Überwachungseinrichtung kann auf diese Weise auch die Art des Störers angezeigt werden, beispielsweise die Art des Mobilfunk-Systems, das der Störer benutzt. Über ein zugehöriges und in der Kabine verteiltes Antennensystem 10 kann gleichzeitig auch eine Ortsangabe über den Störer gewonnen werden, beispielsweise eine Mitteilung darüber, daß in Reihe 5 bis 10 der Störer zu suchen ist, da die in diesen Reihen vorgesehenen Antennen des Antennensystems die Störung erkannt haben. Die Frequenzband-Überwachungseinrichtung 9 könnte gegebenenfalls auch mit einer entsprechenden Hochfrequenz-Peileinrichtung kombiniert werden, die dann exakt das störende Mobiltelefon in der Kabine ortet.

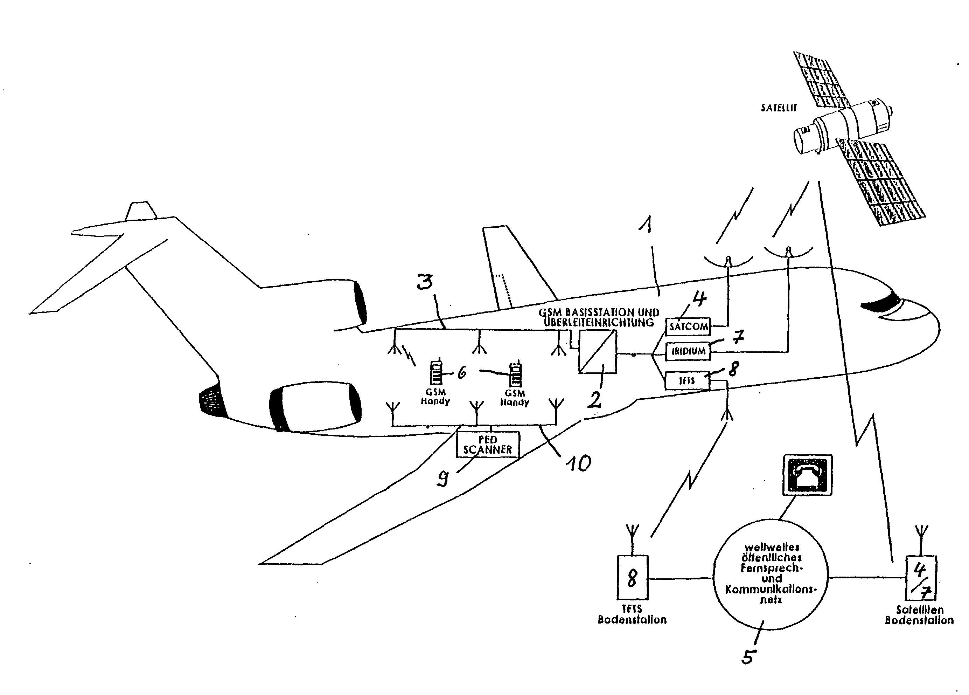

## Patentansprüche

1. System zur Benutzung von Mobiltelefonen in einem Verkehrsflugzeug, die in einem insbesondere nach dem GSM-Standard arbeitenden Zellular-Mobilfunknetz mit mehreren Basisstationen betreibbar sind und deren Sendeleistung über die Basisstationen regelbar ist, wobei an Bord des Flugzeuges (1) eine Basisstation (2) des zugehörigen Mobilfunknetzes vorgesehen ist, die über eine Funkübertragungsstrecke (4, 7, 8) mit dem zugehörigen bodenseitigen Mobilfunknetz (5) verbunden ist, **dadurch gekennzeichnet, daß** über die Basisstation (2) die Senderleistung eines im Flugzeug aktivierten Mobiltelefons (6) automatisch auf ein Minimum reduziert wird.

2. System nach Anspruch 1,
**dadurch gekennzeichnet,**
**daß** für jedes im Einsatzbereich des Flugzeuges übliche Mobilfunknetz an Bord des Flugzeuges eine entsprechende Basisstation vorgesehen ist, die jeweils über eine Funkübertragungsstrecke mit dem zugehörigen bodenseitigen Mobilfunknetz verbunden sind.

3. System nach Anspruch 2,
**dadurch gekennzeichnet,**
**daß** an Bord des Flugzeuges eine für die am häufigsten benutzten Mobilfunknetze geeignete Multifunktions-Basisstation vorgesehen ist.

4. System nach einem der vorhergehenden Ansprüche,
**dadurch gekennzeichnet,**
**daß** die bordseitige Basisstation mit einem in der Flugzeugkabine verteilt angeordneten Antennensystem (3) verbunden ist.

5. System nach einem der vorhergehenden Ansprüche,
**dadurch gekennzeichnet,**
**daß** die Funkübertragungsstrecke zwischen der bordseitigen Basisstation und dem bodenseitigen Mobilfunknetz eine Satellitenübertragungsstrecke (4, 8) ist.

6. System nach einem der vorhergehenden Ansprüche,
**dadurch gekennzeichnet,**
**daß** an Bord des Flugzeuges eine zusätzliche Frequenzband-Überwachungseinrichtung (9) vorgesehen ist, mit welcher die Hochfrequenzabstrahlung von aktivierten Mobiltelefonen feststellbar und anzeigbar ist.

7. System nach Anspruch 6,
**dadurch gekennzeichnet,**
**daß** auch die Frequenzband-Überwachungseinrichtung (9) mit einem in der Flugzeugkabine verteilt angeordneten Antennensystem (10) verbunden ist, insbesondere mit dem (3) der bordseitigen Basisstation.

## Claims

1. System for the use in a passenger aircraft of mobile telephones, which can be operated in a cellular mobile telephone network with several base stations, especially operating according to the GSM standard, wherein the transmission power is controllable via the base stations, wherein a base station (2) of the associated mobile telephone network, which is connected via a radio transmission path (4, 7, 8) to the associated terrestrial mobile telephone network (5), is provided on board the aircraft (1),
**characterised in that**
the transmission power of a mobile telephone (6) activated in the aircraft is automatically reduced to a minimum via the base station (2).

2. System according to claim 1,
**characterised in that**
base stations are provided on board the aircraft corresponding to every conventional mobile telephone network within the service region of the aircraft, each such base station being connected via a radio transmission path to the associated terrestrial mobile telephone network.

3. System according to claim 2
**characterised in that**
an appropriate multi-functional base station is provided on board the aircraft for the most frequently used mobile telephone networks.

4. System according to any one of the preceding claims,
**characterised in that**
the on-board base station is connected to an antenna system (3) arranged in a distributed manner within the aircraft cabin.

5. System according to any one of the preceding claims,
**characterised in that**
the radio transmission path between the on-board base station and the terrestrial mobile telephone network is a satellite transmission path (4, 8).

6. System according to any one of the preceding claims,
**characterised in that**
an additional frequency-band monitoring device (9), which can monitor and display high-frequency radiation from activated mobile telephones, is provided on board the aircraft.

7. System according to claim 6,
**characterised in that**
the frequency-band monitoring device (9) is also connected to an antenna system (10) arranged in a distributed manner within the aircraft cabin, in particular connected to the antenna system (3) of the on-board base station.

## Revendications

1. Système pour l'utilisation dans un avion de ligne de téléphones mobiles qui peuvent fonctionner avec plusieurs stations de base dans un réseau radio mobile cellulaire en particulier suivant la norme GSM et dont la puissance d'émission est réglable par l'intermédiaire des stations de base, une station de base (2) du réseau de radio mobile associé étant prévue à bord de l'avion (1), laquelle est reliée avec le réseau radio mobile au sol associé (5) par l'intermédiaire d'une liaison radio (4, 7, 8), **caractérisé en ce que** la puissance d'émission d'un téléphone mobile (6) activé dans l'avion est automatiquement réduite à un minium par l'intermédiaire de la station de base (2).

2. Système selon la revendication 1, **caractérisé en ce qu'**il est prévu à bord de l'avion, pour chaque réseau radio mobile courant dans le domaine d'utilisation de l'avion, une station de base correspondante qui est reliée par l'intermédiaire d'une liaison radio avec le réseau radio mobile au sol associé.

3. Système selon la revendication 2, **caractérisé en ce qu'**il est prévu, à bord de l'avion, une station de base multifonction adaptée aux réseaux radio mobile utilisés le plus fréquemment.

4. Système selon l'une quelconque des revendications précédentes, **caractérisé en ce que** la station de base à bord est reliée avec un système d'antenne (3) disposé de manière répartie dans la cabine de l'avion.

5. Système selon l'une quelconque des revendications précédentes, **caractérisé en ce que** la liaison radio entre la station de base à bord et le réseau radio mobile au sol est une liaison par satellite (4, 8).

6. Système selon l'une quelconque des revendications précédentes, **caractérisé en ce qu'**il est prévu à bord de l'avion un dispositif de surveillance de bande de fréquence supplémentaire (9) avec lequel le rayonnement haute fréquence de téléphones mobiles peut être vérifié et affiché.

7. Système selon la revendication 6, **caractérisé en ce que** le dispositif de surveillance de bande de fréquence (9) est aussi relié avec un système d'antenne (10) disposé de manière répartie dans la cabine de l'avion, en particulier avec celui (3) de la station de base à bord.
